# EUROPEAN PATENT APPLICATION

(11) **EP 1 111 891 A2**
(43) Date of publication of application: **27.06.2001**
(21) Application number: 00650187.8
(22) Date of filing: 13.11.2000
(51) Int. Cl.: H04M 3/533

(54) **Method for addressing a message from a telephone**

(30) Priority: 23.12.1999 US 471142
(71) Applicant: Nortel Networks Limited, Montreal, Quebec H2Y 3Y4 (CA)
(72) Inventor: Cohen, Marty S., Thornhill, Ontario, L4J 2R5 (CA); Lin, Ping, Toronto, Ontario, M4Y 1L9 (CA)
(74) Representative: Boyce, Conor

(57) **Abstract**

Using the present invention from a telephone set interface, users will be able to compose, reply to and forward messages. Once a directory is established, simply speaking the name of a message recipient will suffice to address a message. The spoken name of the intended recipient is compared to pronunciations of names of possible recipients in the directory until a match is found. An e-mail address of the match may then be used for addressing an outgoing e-mail. Alternatively, a telephone number of the match may be used for addressing an outgoing voice message. Other directories (system, corporate, public) may also be queried to match the spoken name.

## Description

### FIELD OF THE INVENTION

The present invention relates to use of messaging systems from a telephone and, in particular, to methods for addressing a message from a telephone.

### BACKGROUND OF THE INVENTION

In known voice messaging systems, subsequent to (or prior to) a voice message being composed, an intended recipient may be specified by dialing a directory number, such as an extension, of the intended recipient. Additionally, an entire pre-set distribution list of intended recipients may be specified by dialing a directory number associated with the distribution list.

As the number of communication services, such as landline telephone, cellular telephone, satellite telephone, facsimile, voice messaging and electronic messaging (e-mail), increases, there is increasing incentive to amalgamate or unify access to the various services. Products presently exist which present a user with a computer terminal display unifying voice messages and e-mail messages. CallPilot™ by Nortel Networks Corporation of Montreal, Canada is such a product.

Messaging systems, designed for one or more of voice, e-mail, fax or video, typically associate a "mailbox" with each user of the system. Messages received for a particular user are held in the mailbox. Increasingly, messaging systems are unified so that messages of varying formats (voice, fax, e-mail, video, etc.) may be held for a particular user in a single mailbox.

When reviewing messages from a unified messaging system over a voice link, textual e-mail messages may be reviewed through the use of text-to-speech technology. If, after reviewing an e-mail message, a user of such a unified system wishes to reply, a voice message may be recorded and attached to an e-mail message pre-addressed to the sender of the original message. However, if the user of such a unified system wishes to forward the message or compose a voice message for someone other than the sender of the original message, addressing the message may present some difficulty. In particular, addressing a message to an e-mail address is difficult because e-mail addresses are typically not numeric and therefore not readily entered from a telephone.

In an application such as that offered by Shoutmail.com of Palo Alto, California, text-to-speech technology may be used such that a user may review e-mail messages using a telephone set interface. Using such an application, a user may also compose, reply to or forward an e-mail. Shoutmail.com requires that a user first establish a directory of recipients. To address a message from a telephone set, the user supplies the Shoutmail.com system with the first three letters of an intended recipient's last name through the use of the telephone keypad. As is usual, a telephone keypad sends a distinct sound over a voice link for each key pressed. These distinct sounds may be understood at a receiving end of the link if a standard, such as Dual Tone Multi-Frequency (DTMF), is used. The user then dictates a message over the telephone. The message generated by the Shoutmail.com application is an e-mail including the dictation as an attached streaming audio file (in RealAudio™ format, from Real Networks of Seattle, Washington) and a downloadable .WAV file (a standard digital audio file format, created by Microsoft™ of Redmond, Washington).

However, the above application does not speak to addressing a voice message to a remote messaging system that receives messages other than e-mail. It may be preferred that a voice message be sent between messaging systems using a voice messaging system format (either standard or proprietary) rather than a standard computer audio file format.

### SUMMARY OF THE INVENTION

While calling a messaging system, that employs the present invention, from a telephone set interface, users can compose, reply to and forward messages, be they e-mail, voice, fax or other. A number of directories (personal, corporate, and public) may be established ahead of time. To address an outgoing message, a user may indicate an intended recipient, for example by simply speaking a name. The indication of the name of the intended recipient may be compared to pronunciations of names of possible recipients in the various directories until a match is found. The address of the match may then be used for addressing the outgoing message.

In accordance with an aspect of the present invention there is provided a method for addressing a message from a telephone including receiving a spoken indication of an intended recipient of a message, matching the spoken indication with an entry in a directory and sending the message to an address associated in the directory with the matched entry. In another aspect of the invention a messaging system is provided to carry out this method. In a further aspect of the invention a software medium permits a general-purpose computer to carry out the method.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate an example embodiment of this invention:
FIG. **1** schematically illustrates a telecommunication system;
FIG. **2A** illustrates, in a flow diagram, method steps followed by a messaging system in an embodiment of the present invention;
**FIG. 2B** illustrates, in a flow diagram, method steps followed by a messaging system in an embodiment of the present invention;
FIG. **3** illustrates, in a flow diagram, message addressing steps of the methods of FIGS. **2A** and **2B** followed by a messaging system in an embodiment of the present invention;
FIG. **4** illustrates, in flow diagram, personal directory querying steps followed by a messaging system in an embodiment of the present invention;
FIG. **5** illustrates, in flow diagram, system directory querying steps followed by a messaging system in an embodiment of the present invention;
FIG. **6** illustrates, in flow diagram, public directory querying steps followed by a messaging system in an embodiment of the present invention;
FIG. **7** illustrates, in flow diagram, publicly available corporate directory querying steps followed by a messaging system in an embodiment of the present invention; and
FIG. **8** illustrates, in flow diagram, message sending steps of the methods of FIGS. **2A** and **2B** followed by a messaging system in an embodiment of the present invention.

### DETAILED DESCRIPTION OF THE PREFERRED EMBODIMENTS

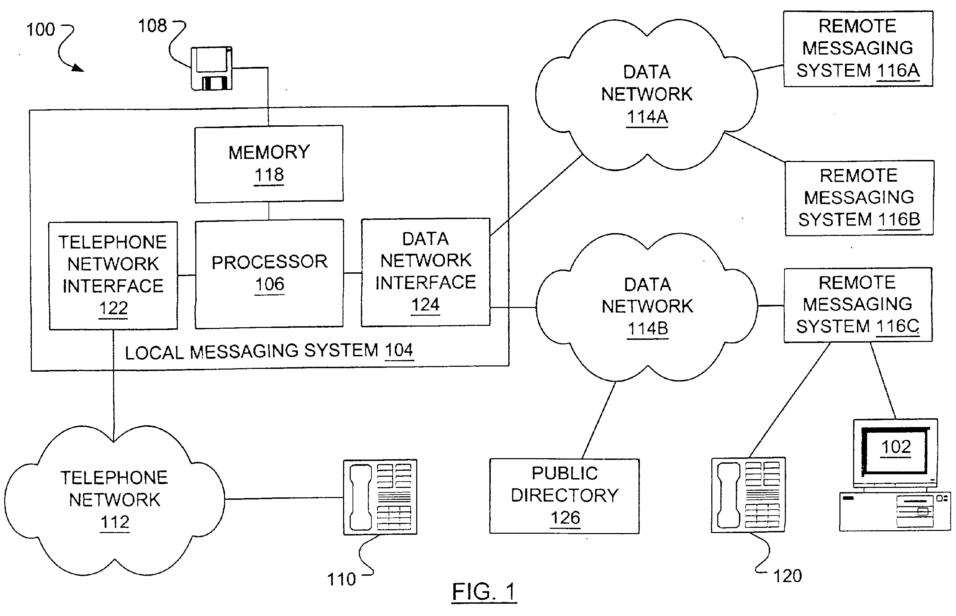

In FIG. **1**, a telephone station apparatus **110** has a connection to a telephone network **112** which may be a private branch exchange (PBX) or public switched telephone network (PSTN) among other possibilities which include a data network wherein telephone traffic is communicated using Internet Protocol (IP) or other relevant technology. A local messaging system **104**, connected to telephone network **112** via a network interface **122**, includes a processor **106** loaded with messaging software for executing the method of this invention from a software medium **108.** Software medium **108** may be a disk, a tape, a chip or a random access memory containing a file downloaded from a remote source. Local messaging system **104** may include a memory **118** for storing messages (voice, e-mail, fax, etc.) and for storing a directory associated with each user and a local system directory. Note that message and directory storage may be available external to local messaging system **104.** Local messaging system **104** also includes a data network interface **124** that connects to a corporate data network **114A** to which remote messaging systems **116A, 116B** also connect. Data network **114A** may represent a network for connecting messaging systems for offices of an organization located in different cities. Data network interface **124** also connects to a data network **114B**, which may be the Internet, to which connects a remote messaging system **116C.** Connected to remote messaging system **116C** may be devices for retrieving messages such as a telephone station apparatus **120** and a terminal **102**. Access to a public directory **126** may be available over data network **114B.**

In overview, a user of local messaging system **104** at telephone station apparatus **110** may wish to record and send a voice message. The user connects to local messaging system **104**, logs in and indicates a desire to record a voice message (by, for instance, responding to voice response prompts, i.e., "dial 7-5 to compose a message"). Upon completing recording the voice message (or before recording the voice message), the user is prompted for an intended recipient for the recorded message. The user may then speak the name of the recipient. Local messaging system **104** may isolate an intended recipient among entries in a directory associated with the user (or other directories including corporate and public directories). The user may then indicate a preferred delivery method for the message: voice mail or e-mail. For a case wherein the voice message is to be sent as part of an e-mail message, the voice message is then converted from the format in which it was recorded to a device independent computer audio file format. Using an e-mail address associated in the directory with the intended recipient, an e-mail message including the voice message is sent over a data network to the recipient.

As is typical, a user of a messaging system may maintain a personal directory, sometimes called a "contact list" or "address book". Such a directory may associate a particular name with a phone number (and/or extension), a fax number, a postal address and an e-mail address among other information. The messaging system may also maintain a system directory maintaining associations between names of the users of the messaging system and their telephone numbers and e-mail addresses. Such directories often exchange information following a standard called the Lightweight Directory Access Protocol (LDAP). Other directories may also be available to a messaging system. Over a public data network, such as the Internet, a messaging system may have access to a public directory or even a corporate directory at a remote messaging system.

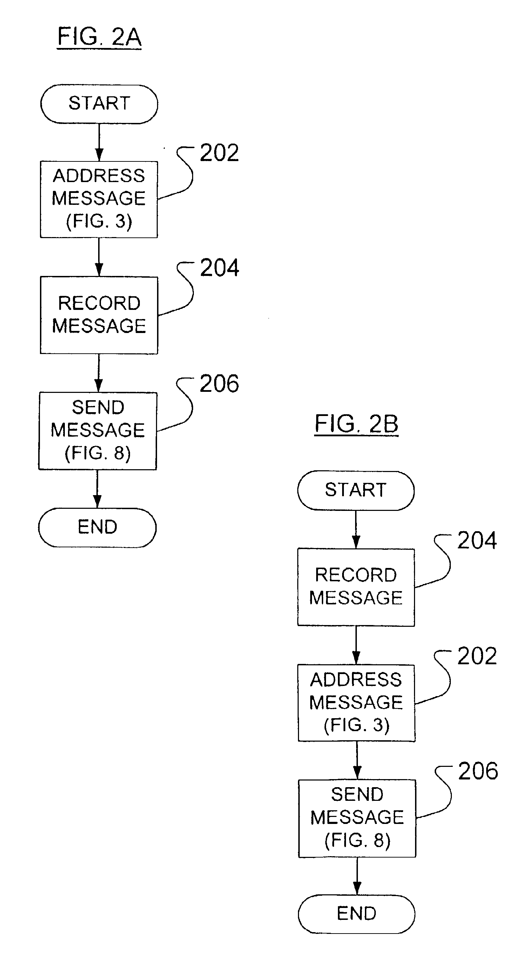

In use, a user calls local messaging system **104** to record a voice message. An algorithm, the steps of which are illustrated in FIG. **2A,** runs which first allows addressing of a voice message (step **202**), recording of the voice message (step **204**) and sending of the voice message (step **206**). Alternatively, as shown in FIG. **2B**, the recording step (step **204**) may precede the addressing step (step **202**). As is known, the format of the recorded voice message may be digital. Digital formats for voice messages include one specified by "Voice Profile for Internet Mail" (VPIM), and many others proprietary to particular messaging systems.

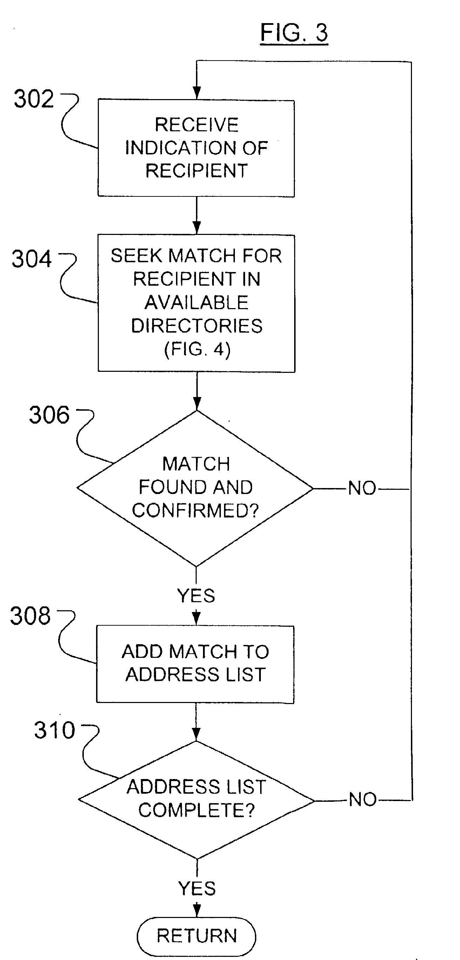

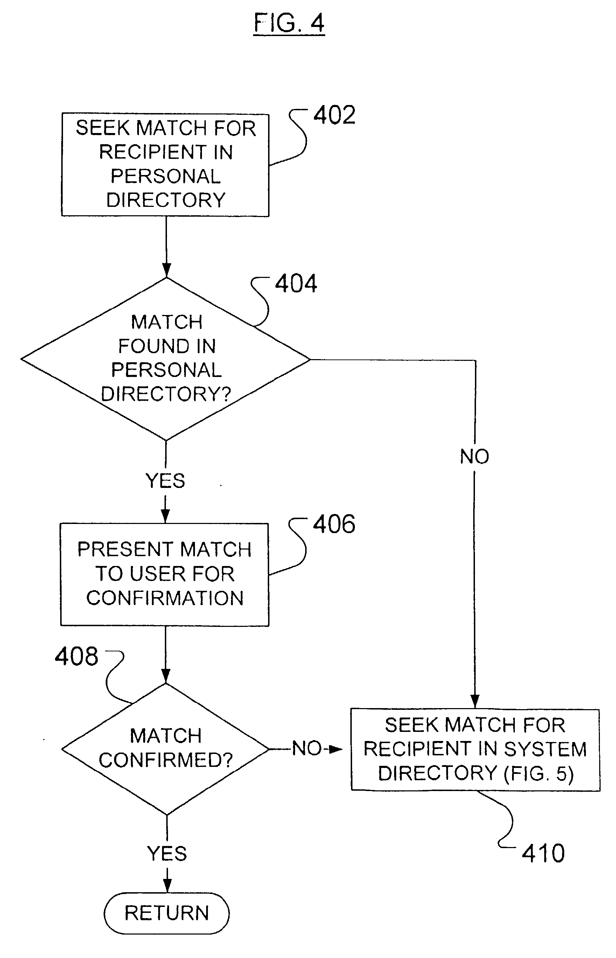

Referencing FIG. **3**, steps of the addressing step (step **204** of FIGS. **2A, 2B**) are illustrated. Initially, an indication of an intended voice message recipient is received by the messaging system (step **302**) and a match for the intended recipient is sought among available directories (step **304**). Details of the match seeking step (step **304**) are described hereinafter in conjunction with FIGS. **4, 5, 6** and **7**. If a matching directory entry is not found, or if found matching entries are not confirmed by the user (step **306**), another opportunity to indicate an intended recipient (step **302**) is afforded the user. If a matching directory entry is found and confirmed by the user as the correct recipient (step **306**), the directory entry is added to an address list to be associated with the voice message (step **308**). If the address list is complete (step **310**), the addressing is complete. Note that the address list may only comprise a single directory entry. If the address list is not complete (step **310**), another opportunity to indicate an intended recipient (step **302**) is afforded the user.

Initial steps of the match seeking step (step **304** in FIG. **3**) are illustrated in FIG. **4**. A match is sought in a personal directory (step **402**) and, if one or more matches are found (step **404**), the matches are presented to the user for confirmation (step **406**). In the case of a single match, the user may simply answer yes or no (via the telephone keypad, or verbally) to a question as to whether the match corresponds to the correct recipient. In the case of multiple matches, the user may be allowed to specify (via the telephone keypad, or verbally) which match is the correct recipient or "none of the above". Once a match is confirmed or selected (step **408**), the match seeking step is complete. However, if none of the matches are correct, a system directory may be queried (step **410**). The system directory may be, for instance, a corporate directory for the workplace of the user. The corporate directory may include only users at the location of the specific user, or may include many locations, encompassing, perhaps, an entire enterprise.

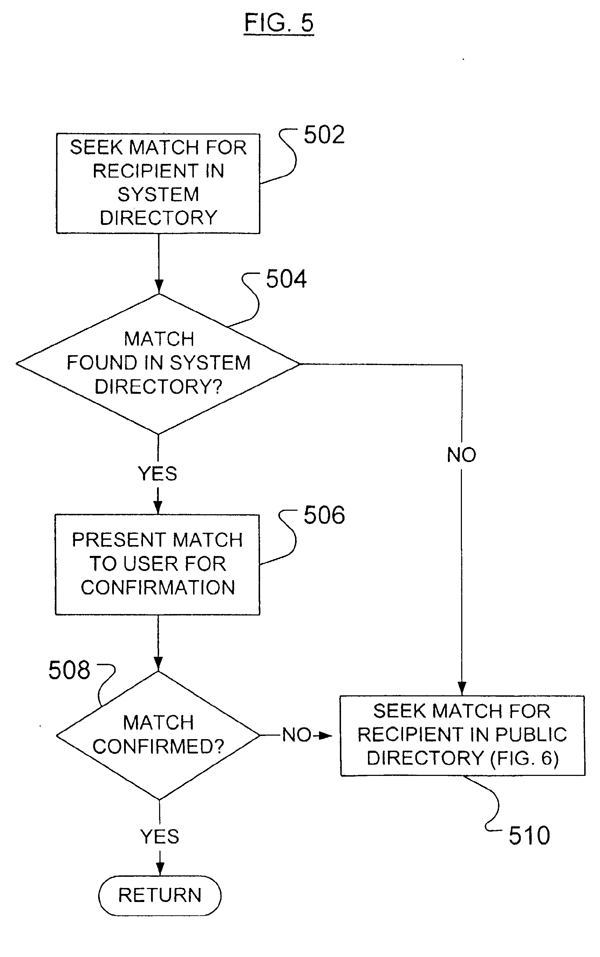

Steps of a system directory query (step **410** in FIG. **4**) are illustrated in FIG. **5**. A match is sought in the system directory (step **502**) and, if one or more matches are found (step **504**), the matches are presented to the user for confirmation (step **506**). In the case of a single match, the user may simply answer yes or no (via the telephone keypad, or verbally) to a question as to whether the match corresponds to the correct recipient. In the case of multiple matches, the user may be allowed to specify (via the telephone keypad, or verbally) which match is the correct recipient or "none of the above". Once a match is confirmed or selected (step **508**), the system directory query is complete. However, if none of the matches are correct, a public directory may be queried (step **510**). Preferred, or often used, public directories may be pre-set (specified in advance) by a user or by an administrator of local messaging system **104**.

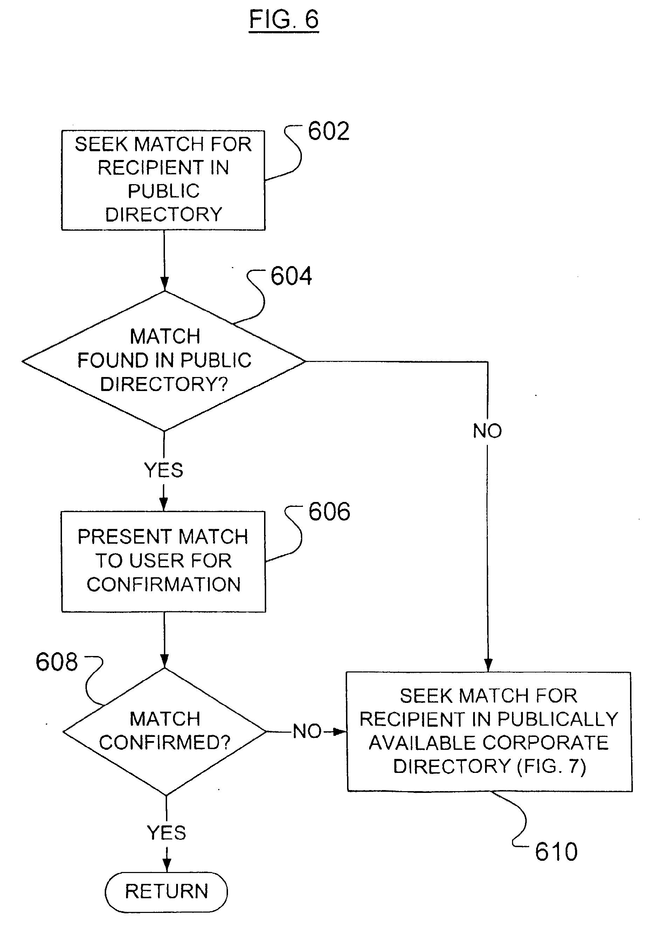

Steps of a public directory query (step **510** in FIG. **5**) are illustrated in FIG. **6**. A match is sought in the public directory (step **602**) and, if one or more matches are found (step **604**), the matches are presented to the user for confirmation (step **606**). In the case of a single match, the user may simply answer yes or no (via the telephone keypad, or verbally) to a question as to whether the match corresponds to the correct recipient. In the case of multiple matches, the user may be allowed to specify (via the telephone keypad, or verbally) which match is the correct recipient or "none of the above". Once a match is confirmed or selected (step **608**), the public directory query is complete. However, if none of the matches are correct, a publicly available corporate directory may be queried (step **610**). Note that a corporate directory search may be performed prior to the public directory query

The initiation of a query to a publicly available corporate directory (step 610) may take many forms. In a first form, a data network address of only one corporate directory is available to local messaging system **104** (FIG. **1**) and that corporate directory is queried after a failure to find a match elsewhere. In another form, a plurality of corporate directories are available to local messaging system **104** (FIG. **1**) and the user may be provided with an opportunity to indicate which corporate directory to query for the intended recipient. Alternatively, the plurality of corporate directories may be queried one at a time, in a predetermined order. Additionally, where a spoken indication of an intended recipient is recognized as an e-mail address, then, rather than sequentially searching a personal directory, a system directory and one or more pre-set public directories, the spoken indication may be parsed into a recipient name and a domain name (or other indication of a messaging system associated with the intended recipient). A match for the domain name may be then be sought among those domain names corresponding to corporate directories for which a data network address is available to local messaging system **104** (FIG. **1**).

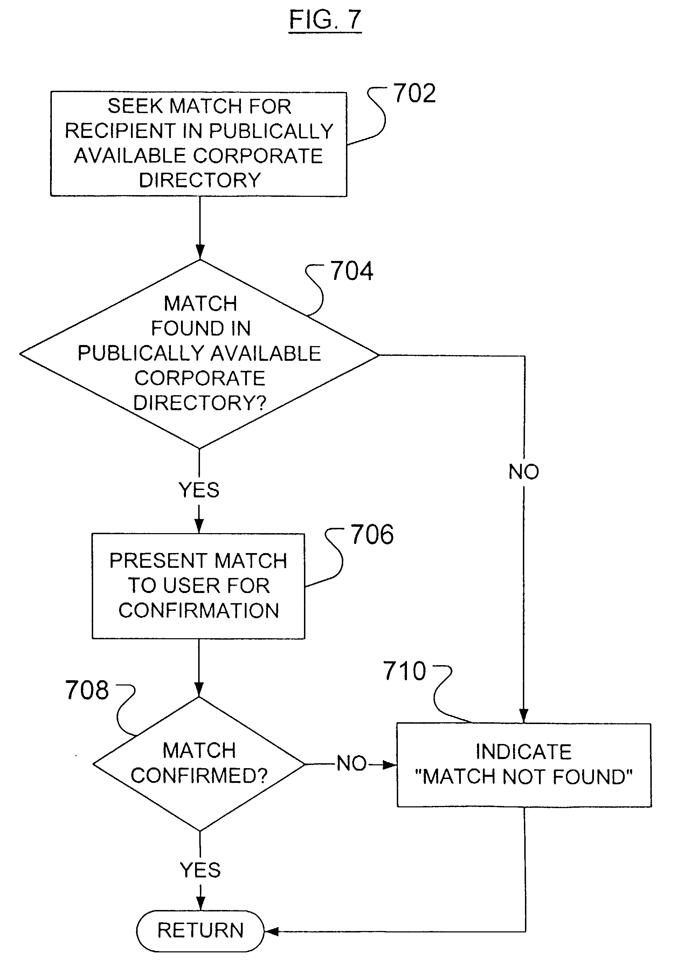

Steps of a publicly available corporate directory query (step **610** in FIG. **6**) are illustrated in FIG. **7**. A match is sought in the publicly available corporate directory (step **702**) and, if one or more matches are found (step **704**), the matches are presented to the user for confirmation (step **706**). In the case of a single match, the user may simply answer yes or no (via the telephone keypad, or verbally) to a question as to whether the match corresponds to the correct recipient. In the case of multiple matches, the user may be allowed to specify (via the telephone keypad, or verbally) which match is the correct recipient or "none of the above". Once a match is confirmed or selected (step **708**), the publicly available corporate directory query is complete. However, if none of the matches are correct, it may be indicated to the user that a match could not be found (step **710**). As will be apparent to a person skilled in the art, an indication that a match could not be found (step **710**) may follow an unsuccessful query to any of the above directories, and the order of queries may be other than described above. As well, rather than querying one directory at a time (a serial approach), many directories may be queried at once (a parallel approach).

A directory entry, in any of the above referenced directories may include such information as a name, a digital representation of the pronunciation of the name, a telephone directory number of a messaging system at which the named party has a mailbox (for voice mail, e-mail or both, for instance), a data network address of the messaging system and an e-mail address.

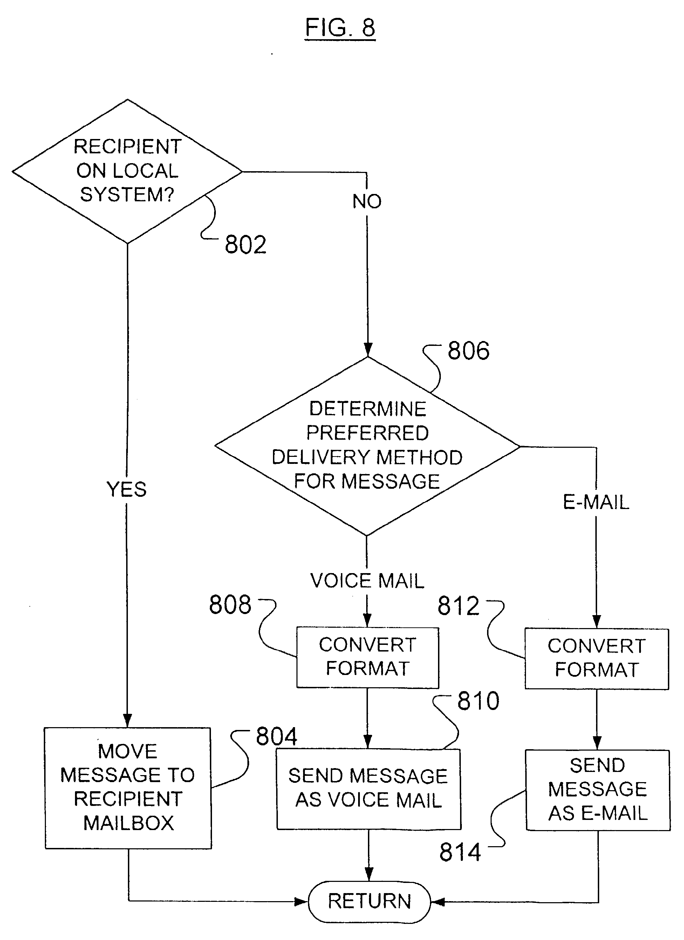

Turning to FIG. **8**, steps are outlined for sending a voice message (step **206**, FIG. **2**) to each of the intended recipients, assuming a match was found for the intended recipient(s) in the previous step (step **204,** FIG. **2**). It is first determined whether the intended recipient is on local messaging system **104** (step **802**). If so, rather than sending the voice message, it is simply moved to the mailbox of the intended recipient (step **804**). Where the intended recipient is on a remote messaging system (as determined from the directory entry), a preferred delivery method for the message is determined (step **806**). If the preferred delivery method is voice mail, the voice message may be appropriately addressed and sent to the remote messaging system (step **810**) in a format determined by the system. The voice message may be sent (step **810**) in a proprietary format or be converted (step **808**) to another format, such as VPIM, and then sent (step **810**). If the voice message is to be sent as e-mail, the voice message may be converted to a more universal audio format (step **812**), such as a .WAV file format, and sent to the intended recipient as an attachment to an e-mail message (step 814).

Step **302** (FIG. **3**), the receipt by local messaging system **104** of an indication of an intended recipient for a voice message, may be accomplished in a number of ways.

The user may use the technique known as "name dialing" wherein one button on the telephone keypad is dialed for each letter of a name. Using such a technique, 2-7-6-9-6 (ABC-PQRS-MNO-WXYZ-MNO) may be dialed to spell the name "Brown". Speech recognition may also be used to spell a name of an intended recipient. For instance "bee are oh double-you en" would be used to indicate the name "Brown". In name dialing, the messaging system may narrow the list of potential recipients with every indicated letter.

Alternatively, the user may speak the name (in whole or in part) of the intended recipient. Known speech recognition methods may then be used. While creating a directory entry, a user may provide a speech sample to be associated with the directory entry. This speech sample may be of the name from the name field of the entry. The spoken indication may also be of a nickname. In the latter case the user may associate a speech sample of "mom" with the directory entry relating to the user's mother. Where speech samples have not been provided, the spelling of a name in a directory may provide a clue to its pronunciation. Entries in a directory may be pre-processed to arrive at a digital representation of a pronunciation of the associated name. The pre-processing may, for instance, involve breaking the name into a series of recognized phonemes (phonetic units or speech sounds). A received indication of an intended recipient may also be broken into a series of recognized phonemes. The received series of phonemes may be compared to the pre-processed series of phonemes associated with each directory entry until a match is found.

In either technique of determining an intended recipient, more than one probable directory entries may be found, especially when names have similar spelling and/or sound alike or when multiple individuals in a directory have the same name. The messaging system may offer a choice of the directory entries found, i.e. "Press 1 for John A. Smith, 2 for John B. Smith or 3 for neither".

Consider, in conjunction with FIG. **1**, a scenario wherein a user at telephone station apparatus **110** calls local messaging system **104** to review messages. After reviewing a received e-mail message, the user indicates to local messaging system **104**, through the use of the telephone keypad, a desire to forward the e-mail message to an associate. The user then records an introduction to the message. When prompted for a recipient, the user speaks the surname of the associate, "Brown". Local messaging system 104 scans the user's personal directory for a match. A most probable match is found at the entry for James Brown. His directory entry may take the following form:

| Name | Pronunciation | Phone Number | Extension | E-mail Address |
|---|---|---|---|---|
| Brown, James | 01000101 01101001 00101010 10101010 | (416) 555-1234 | 336 | Brown@mail.com |

The name associated with this directory entry is presented to the user for confirmation, i.e. "Press 1 to accept <Brown, James> or 2 to reject". Local messaging system **104** then determines that the phone number of the directory entry is that of a remote messaging system **116B**. The data network address of remote messaging system **116B** is then determined, either from the directory entry or elsewhere through an association between the phone number and a data network address. As well, presence of an e-mail address is noted. The user is given an opportunity to select a delivery method and selects voice mail. The received e-mail message is associated with the recorded introduction and sent, via data network **114A**, from local messaging system **104** to remote messaging system **116B.** At remote messaging system **116B** the received message is placed in the "336" mailbox.

As will be apparent to a person skilled in the art, a directory entry may not be limited to a single message recipient and may instead be a distribution list. In such a case, the outgoing message may be sent to all members of the distribution list.

Other modifications will be apparent to those skilled in the art and, therefore, the invention is defined in the claims.

## Claims

1. A method for addressing a message from a telephone comprising:
receiving a spoken indication of an intended recipient of a message;
matching said spoken indication with an entry in a directory; and
sending said message to an address associated in said directory with said matched entry.

2. The method of claim 1 wherein said address is an e-mail address.

3. The method of claim 1 further comprising:
parsing said spoken indication into a recipient name and an indication of a messaging system associated with the intended recipient;
using said messaging system indication to identify a corresponding directory to query; and
wherein said matching comprises querying said corresponding directory.

4. The method of claim 1 wherein said address identifies a mailbox on a voice messaging system.

5. The method of claim 1 further comprising
pre-processing a textual name associated with an entry in said directory to determine a likely pronunciation;
storing said likely pronunciation associated with said entry in said directory; and
wherein said matching comprises matching said spoken indication to said likely pronunciation.

6. The method of claim 1 further comprising
pre-recording a pronunciation of a name;
associating said pre-recorded pronunciation of said name with an entry in said directory; and
wherein said matching comprises matching said spoken indication to said pre-recorded pronunciation.

7. The method of claim 1 wherein said spoken indication comprises a spoken indication of individual letters forming a name of said intended recipient.

8. The method of claim 1 wherein said directory is associated with a particular user.

9. The method of claim 1 wherein said directory is associated with a local messaging system.

10. The method of claim 1 wherein said directory is associated with a remote messaging system.

11. The method of claim 1 wherein said directory is publicly available over a data network.

12. The method of claim 1 wherein said entry in said directory includes an e-mail address and an address to which a voice message may be sent and said method further comprises receiving an indication of a preferred delivery method.

13. A messaging system comprising:
means for receiving a spoken indication of an intended recipient of a message;
means for matching said spoken indication with an entry in a directory; and
means for sending said message to an address associated in said directory with said matched entry.

14. A messaging system comprising:
a telephone network interface for receiving a spoken indication of an intended recipient of a message;
a processor operable to match said spoken indication with an entry in a directory; and a data network interface for sending said message to an address associated in said directory with said matched entry.

15. A computer readable medium for providing program control to a processor, said processor included in a messaging system, said computer readable medium adapting said processor to be operable to:
receive a spoken indication of an intended recipient of a message;
match said spoken indication with an entry in a directory; and
send said message to an address associated in said directory with said matched entry.
